# EUROPÄISCHE PATENTSCHRIFT

(11) **EP 1 217 251 B1**
(45) Veröffentlichungstag und Bekanntmachung des Hinweises auf die Patenterteilung: **10.05.2006**
(21) Anmeldenummer: 01128669.7
(22) Anmeldetag: 01.12.2001
(51) Int. Cl.: F16F 13/10, F16F 13/16, F16F 13/18

(54) **Hydrolager**
Hydraulically-damped support
Support à amortissement hydraulique

(30) Priorität: 21.12.2000 DE 10064330
(43) Veröffentlichungstag der Anmeldung: 26.06.2002
(60) Teilanmeldung: 04024491.5
(73) Patentinhaber: Carl Freudenberg KG, 69469 Weinheim (DE)
(72) Erfinder: West, John Philip, Kirklington NG22 8ND, Nottinghamshire (GB)

(56) Entgegenhaltungen:
- EP-A- 0 293 726
- EP-A- 1 113 187
- DE-A- 3 618 767
- DE-A- 3 722 132
- DE-A- 3 831 644
- DE-A- 4 117 128
- DE-A- 4 117 129
- US-A- 4 809 959
- US-A- 5 305 991
- US-A- 5 386 973
- US-A- 5 531 426
- PATENT ABSTRACTS OF JAPAN vol. 011, no. 120 (M-580), 15. April 1987 (1987-04-15) & JP 61 262244 A (BRIDGESTONE CORP), 20. November 1986 (1986-11-20)

## Beschreibung

Die Erfindung betrifft ein Hydrolager, umfassend ein Traglager und ein Auflager, die durch einen Federkörper aus gummielastischem Werkstoff miteinander verbunden sind und zumindest einen Arbeitsraum und zumindest einen Ausgleichsraum begrenzen, wobei der Arbeits- und der Ausgleichsraum jeweils mit Dämpfungsflüssigkeit gefüllt und durch eine Dämpfungseinrichtung flüssigkeitsleitend verbunden sind.

### Stand der Technik

Solche Hydrolager sind allgemein bekannt und gelangen beispielsweise als Motorlager zur Anwendung. Die Dämpfungsrichtung erstreckt sich dabei parallel zur Achse des Hydrolagers.
Aus der DE 41 17 128 A1 ist ein Hydrolager bekannt, welches in Axial- und Radialrichtung dämpfend wirkt. Das vorbekannte Hydrolager weist getrennte Gruppen einander diametral gegenüberliegender, dämpfungsmittelgefüllter, nierenförmiger Kammern auf, die zur axialen und/oder radialen Dämpfung miteinander verbunden sind.

Aus der US 5,386,973 ist ein Hydrolager bekannt, welches ebenfalls im Axial-und Radialrichtung dämpfend wirkt. Dazu weist das Hydrolager wenigstens zwei in axialer Richtung erstreckende nierenförmige Kammern auf, die durch eine Trennwand von einem Arbeitsraum getrennt sind. Die Kammern und der Arbeitsraum sind mit Dämpfungsflüssigkeit befüllt. Die Trennwand ist durch einen Verbund aus starrem Bauteil und elastischem Bauteil gebildet.

Die US 4,809,959 zeigt ein Hydrolager bei dem der Arbeitsraum und der Ausgleichsraum durch eine Drossel miteinander verbunden sind, die gewendelt im Kern verläuft.

### Darstellung der Erfindung

Der Erfindung liegt die Aufgabe zugrunde, ein Hydrolager der eingangs genannten Art derart weiterzuentwickeln, dass dieses zusätzlich zur Dämpfungsrichtung parallel zur Achse des Hydrolagers eine Dämpfungsrichtung aufweist, die sich in radialer Richtung erstreckt und dass die Dämpfung in axialer Richtung unabhängig von der Dämpfung in radialer Richtung erfolgt.

Diese Aufgabe wird erfindungsgemäß mit den Merkmalen von Anspruch 1 gelöst. Auf vorteilhafte Ausgestaltungen nehmen die Unteransprüche Bezug.

Zur Lösung der Aufgabe ist es vorgesehen, dass die beiden Flüssigkeitstaschen vom Arbeits- und/oder Ausgleichsraum durch ein starres Bauteil vollständig hydraulisch separiert sind. Hierbei ist von Vorteil, dass eine Dämpfung der eingeleiteten Schwingungen nicht nur in axialer Richtung sondern auch quer zur Achse des Hydrolagers erfolgt. Schwingungen, die durch Lastwechsel, Beschleunigen oder Bremsen verursacht sind, können durch ein solches Lager in ausgezeichneter Weise gedämpft werden, ebenso wie Schwingungen, die in Achsrichtung des Lagers, beispielsweise beim Überfahren von Bordsteinkanten, eingeleitet werden. Höherfrequente, kleinamplitudige Schwingungen, die beispielsweise von der Oberfläche der Fahrbahn und/oder dem Reifenprofil eines Kraftfahrzeugs eingeleitet werden, können bedarfsweise, beispielsweise bei entsprechender Ausgestaltung der Trennwand zwischen Arbeitsraum und Ausgleichsraum isoliert werden.

Die Flüssigkeitstaschen können jeweils im Wesentlichen nierenförmig ausgebildet sein und sich jeweils im Wesentlichen halbkreisförmig um den Kern des Traglagers erstrecken. Zur Dämpfung radial eingeleiteter Schwingungen werden Flüssigkeitsbestandteile aus der einen Flüssigkeitstasche durch die Drosselöffnung in die andere Flüssigkeitstasche und wieder zurück verschoben. Je nachdem, wie der Strömungswiderstand der Drosselöffnung im Vergleich zum Strömungswiderstand des Dämpfungskanals ausgelegt ist, besteht die Möglichkeit, dass zusätzlich Flüssigkeitsbestandteile durch den Dämpfungskanal in den Ausgleichsraum geleitet werden.

Hierbei ist von Vorteil, dass die Flüssigkeitstaschen mit konventionellen Hydrolagern kombinierbar sind. Ein Flüssigkeitsaustausch zwischen den Flüssigkeitstaschen und dem Arbeitsraum oder den Flüssigkeitstaschen und dem Ausgleichsraum findet daher nicht statt. Zur Funktion eines solchen Hydrolagers wird folgendes ausgeführt:
Die Dämpfung/Isolierung von Schwingungen, die axial in das Hydrolager eingeleitet werden, erfolgt wie aus dem Stand der Technik bekannt. Zur Dämpfung tieffrequenter, großamplitudiger Schwingungen werden Flüssigkeitsbestandteile aus dem Arbeitsraum durch den Dämpfungskanal in den Ausgleichsraum und wieder zurück verlagert. Dadurch werden die eingeleiteten Schwingungen gedämpft. Zur Isolierung höherfrequenter, kleinamplitudiger Schwingungen kann beispielsweise eine Membran innerhalb der als Düsenkäfig ausgebildeten Trennwand hin- und herbewegbar sein, wobei die Trennwand beispielsweise eingespannt oder als Lose ausgebildet sein kann. Ein solches Hydrolager arbeitet funktionstechnisch unabhängig von den Flüssigkeitstaschen. Werden Schwingungen in radialer Richtung eingeleitet, ist die Flüssigkeit innerhalb des Arbeitsraums und des Ausgleichsraums hydraulisch blockiert; nur die Flüssigkeit innerhalb der beiden Flüssigkeitstaschen wird in radialer Richtung hin- und hervenagert, wodurch sich eine Dämpfung der in radialer Richtung eingeleiteten Schwingungen ergibt.

Die Bauteile, die zur Isolierung höherfrequenter, kleinamplitudiger Schwingungen benötigt werden, beispielsweise eine Membran aus gummielastischem Werkstoff, die innerhalb eines Düsenkäfigs zwischen Arbeitsraum und Ausgleichsraum angeordnet ist, ist Stand der Technik und kann bedarfsweise vorgesehen werden, ohne dass der mit der Konstruktion von Hydrolagern betraute Fachmann erfinderisch tätig zu werden braucht.

Die Dämpfungseinrichtung kann bevorzugt durch eine Trennwand zwischen Arbeits- und Ausgleichsraum gebildet sein, wobei die Trennwand zumindest einen Dämpfungskanal aufweist. Der Dämpfungseffekt beruht darauf, dass die innerhalb des Dämpfungskanals befindliche Dämpfungsflüssigkeit phasenverschoben, bevorzugt gegenphasig zu den eingeleiteten Schwingungen hin- und herbeweglich ist. Je größer die Flüssigkeitsmasse innerhalb des Dämpfungskanals ist, desto niedriger können die zu dämpfenden Frequenzen sein.

Der Arbeits- und der Ausgleichsraum können in axialer Richtung benachbart zueinander und durch die Trennwand getrennt voneinander angeordnet sein. Dieser Aufbau entspricht im Wesentlichen dem Aufbau konventioneller Hydrolager, wobei zum Dämpfen tieffrequenter, großamplitudiger Schwingungen Dämpfungsflüssigkeit zwischen dem Arbeitsraum und dem Ausgleichsraum durch den Dämpfungskanal innerhalb der Trennwand hin- und herverlagert wird. Derartige Hydrolager bauen in radialer Richtung vergleichsweise kompakt, wobei die Länge des Dämpfungskanals beispielsweise dadurch variierbar ist, dass dieser mehrfach gewendelt innerhalb der Trennwand verläuft.

Der Dämpfungskanal oder die Drosselöffnung können im Kern des Traglagers angeordnet sein. Hierbei ist von Vorteil, dass das Hydrolager insgesamt einen einfachen und kompakten Aufbau aufweist, da der Kern, der ohnehin vorhanden ist, als Dämpfungseinrichtung genutzt wird. Der Dämpfungskanal oder die Drosselöffnung können beispielsweise im Außenbereich des Kerns spiralförmig angeordnet sein, wobei Flüssigkeitsbestandteile aus einer Flüssigkeitstasche durch den Dämpfungskanal oder die Drosselöffnung im Kern in die andere Flüssigkeitstasche geleitet werden. In radialer Richtung eingeleitete Schwingungen werden dadurch gedämpft.

Der Dämpfungskanal oder die Drosselöffnung können gewendelt im Kern verlaufen. Dadurch wird eine große Länge der Dämpfungseinrichtung bei geringem Platzbedarf erzielt, um tieffrequente, großamplitudige Schwingungen dämpfen zu können.

Der Ausgleichsraum kann auf der der Umgebung zugewandten Seite durch eine rollbalgartig ausgebildete, im Wesentlichen drucklos Volumen aufnehmende Membran begrenzt sein. Hierbei ist von Vorteil, dass eine unerwünschte dynamische Verhärtung des Hydrolagers unterbleibt.

### Kurzbeschreibung der Zeichnungen

Mehrere Ausführungsbeispiele des erfindungsgemäßen Hydrolagers sind in den Figuren 1 bis 3 gezeigt und werden im folgenden näher beschrieben.

Diese zeigen jeweils in schematischer Darstellung:
- Fig. 1: ein Ausführungsbeispiel in längsgeschnittener Darstellung,
- Fig. 2: ein Ausführungsbeispiel eines Hydrolagers in längsgeschnittener Darstellung,
- Fig. 3: eine alternative Darstellung der Trennwand

### Ausführung der Erfindung

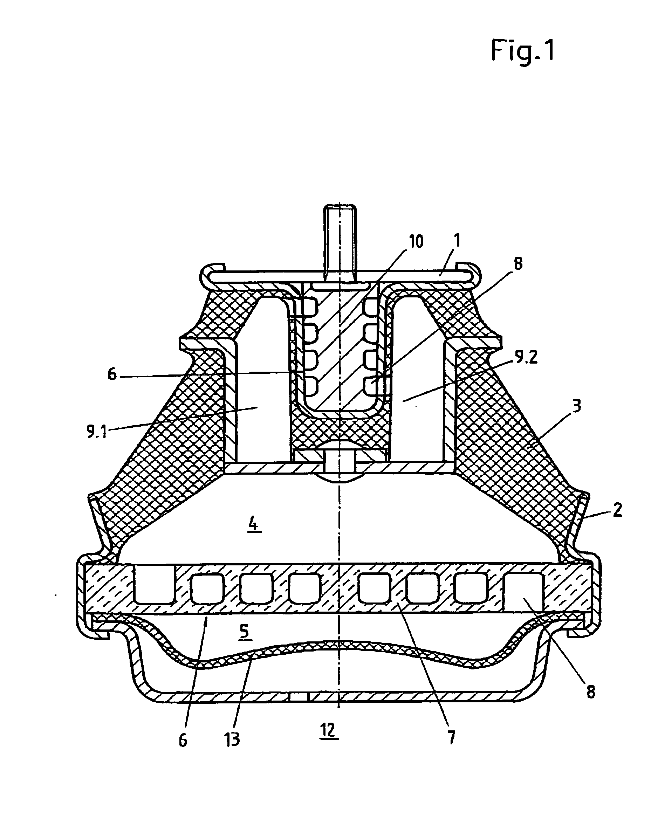

Die Hydrolager aus den Figuren 1 bis 2 umfassen jeweils ein Traglager 1 und ein Auflager 2, die durch den Federkörper 3 miteinander verbunden sind. Der Federkörper 3 besteht aus einem gummielastischen Werkstoff und begrenzt zusammen mit dem Traglager 1 und dem Auflager 2 einen Arbeitsraum 4 und einen Ausgleichsraum 5. Der Arbeitsraum 4 und der Ausgleichsraum 5 sind mit Dämpfungsflüssigkeit gefüllt und durch die Dämpfungseinrichtung 6 flüssigkeitsleitend miteinander verbunden. Die Dämpfungseinrichtung 6 ist bei relativer radialer Verlagerung von Traglager 1 und Auflager 2 zueinander von der Dämpfungsflüssigkeit durchströmbar.

### Zur Funktion des Hydrolagers wird folgendes ausgeführt:

Bei Einleitung tieffrequenter, großamplitudiger Schwingungen in Achsrichtung des Hydrolagers verlagert sich das Traglager 1 axial in Richtung der Trennwand 7, wodurch Dämpfungsflüssigkeit durch den Dämpfungskanal 8 vom Arbeitsraum 4 in den Ausgleichsraum 5 gefördert wird. Durch die Membran 13, die rollbalgartig ausgebildet ist, wird die Dämpfungsflüssigkeit innerhalb des Ausgleichsraums 5 im Wesentlichen drucklos aufgenommen. Beim Ausfedem des Traglagers 1 wird die zuvor in den Ausgleichsraum 5 geförderte Dämpfungsflüssigkeit durch den Dämpfungskanal 8 wieder zurück in den Arbeitsraum 4 gefördert. Die Hin- und Herverlagerung der Dämpfungsflüssigkeit im Dämpfungskanal 8 vom Arbeitsraum 4 durch den Dämpfungskanal 8 in den Ausgleichsraum und wieder zurück erfolgt gegenphasig zur eingeleiteten Schwingung.

In Figur 1 ist ein Hydrolager gezeigt, das sich von herkömmlichen Hydrolagern, die ausschließlich in axialer Richtung dämpfen, durch eine abweichende Gestalt im Bereich des Traglagers 1 unterscheidet. Die beiden Flüssigkeitstaschen 9.1, 9.2 sind vom Arbeits- 4 und/oder Ausgleichsraum 5 hydraulisch separiert. Bei einer radialen Hin- und Herverlagerung des Traglagers 1 bezogen auf das Auflager 2 wird ein Teil der Dämpfungsflüssigkeit aus einer der Flüssigkeitstaschen 9.1 verdrängt, wobei die verdrängte Dämpfungsflüssigkeit durch die andere Flüssigkeitstasche 9.2 aufgenommen wird. Anschließend erfolgt die Flüssigkeitsverlagerung in umgekehrter Richtung. Die Flüssigkeitsverlagerung zwischen den Flüssigkeitstaschen 9.1, 9.2 erfolgt gegenphasig zu der radial eingeleiteten Schwingung.
Zur Dämpfung niederfrequenter, großamplitudiger Schwingungen, die in axialer Richtung in das Hydrolager eingeleitet werden, erfolgt eine Verlagerung der Dämpfungsflüssigkeit vom Arbeitsraum 4 in den Ausgleichsraum 5 und umgekehrt. Dadurch, dass die Dämpfungsflüssigkeit innerhalb der Flüssigkeitstaschen 9.1, 9.2 von der Dämpfungsflüssigkeit innerhalb des Arbeits- 4 und Ausgleichsraum 5 getrennt ist, können beispielsweise Dämpfungsflüssigkeiten mit unterschiedlicher Viskosität zur Anwendung gelangen. Hierbei ist von Vorteil, dass sowohl die Dämpfung in axialer Richtung als auch die Dämpfung in radialer Richtung optimal an die jeweiligen Gegebenheiten des Anwendungsfalles angepasst werden können.

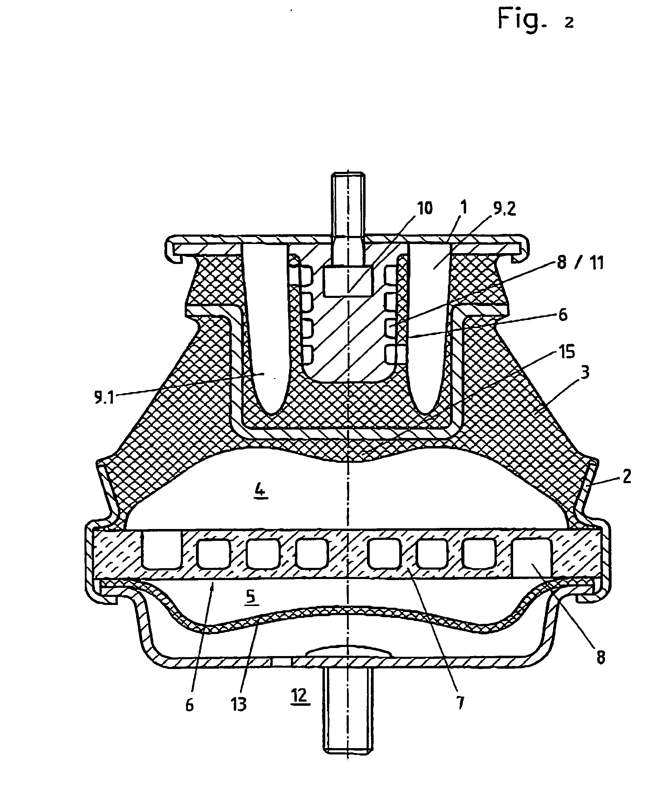

In Figur 2 ist ein weiteres Ausführungsbeispiel gezeigt, das im Wesentlichen dem Ausführungsbeispiel aus Figur 1 entspricht. Abweichend vom Ausführungsbeispiel aus Figur 1 ist in diesem Ausführungsbeispiel ein Anschlagpuffer 15 vorgesehen, der einstückig ineinander übergehend mit dem Federkörper 3 ausgebildet und zur Begrenzung axialer Auslenkbewegungen an die Trennwand 7 anlegbar ist.

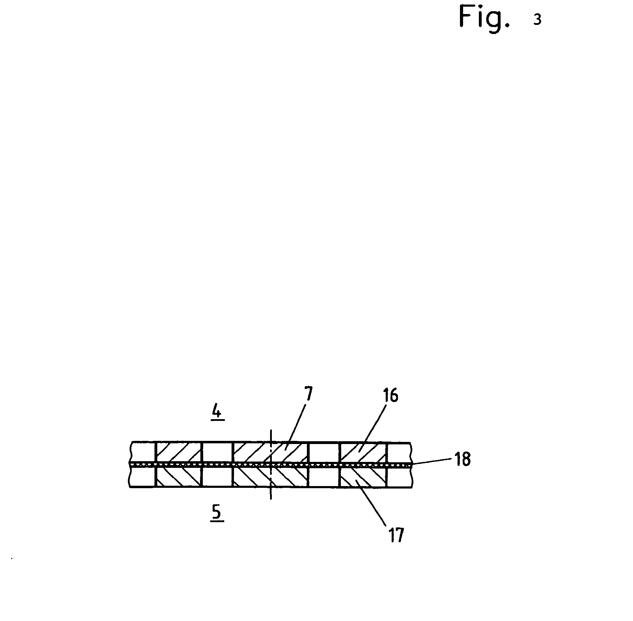

In Figur 3 ist eine alternative Ausgestaltung einer Trennwand 7 gezeigt, die durch einen Düsenkäfig gebildet ist, wobei die Trennwand 7 aus einem Oberteil 16 und einem Unterteil 17 besteht, die in axialer Richtung zur Isolierung höherfrequenter, kieinampiitudiger Schwingungen durch eine in axialer Richtung schwingfähige Membran 18 getrennt sind. Diese Trennwand 7 aus Figur 3 kann altemativ anstelle der Trennwand 7 aus der Figur 1 und 2 zur Anwendung gelangen.

## Patentansprüche

1. Hydrolager, umfassend ein Traglager (1) und ein Auflager (2), die durch einen Federkörper (3) aus gummielastischem Werkstoff miteinander verbunden sind und zumindest einen Arbeitsraum (4) und zumindest einen Ausgleichsraum (5) begrenzen, wobei der Arbeits- und der Ausgleichsraum jeweils mit Dämpfungsflüssigkeit gefüllt und durch eine Dämpfungseinrichtung (6) flüssigkeitsleitend verbunden sind, wobei eine weitere Dämpfungseinrichtung (6) bei relativer radialer Verlagerung von Traglager (1) und Auflager (2) zueinander von der Dämpfungsflüssigkeit durchströmbar ist, wobei der Arbeitsraum (4) zwei sich in axialer Richtung erstreckende volumenveränderliche Flüssigkeitstaschen (9.1, 9.2) aufweist, die durch zumindest eine Drosselöffnung (11) verbunden sind, **dadurch gekennzeichnet, dass** die beiden Flüssigkeitstaschen (9.1, 9.2) vom Arbeits- (4) und/oder Ausgleichsraum (5) durch ein starres Bauteil vollständig hydraulisch separiert sind.

2. Hydrolager nach Anspruch 1, **dadurch gekennzeichnet, dass** die Dämpfungseinrichtung (6) durch eine Trennwand (7) zwischen Arbeits- (4) und Ausgleichsraum (5) gebildet ist und dass die Trennwand (7) zumindest einen Dämpfungskanal (8) aufweist.

3. Hydrolager nach einem der Ansprüche 1 oder 2, **dadurch gekennzeichnet, dass** der Arbeits- (4) und der Ausgleichsraum (5) in axialer Richtung benachbart zueinander und durch die Trennwand (7) getrennt voneinander angeordnet sind.

4. Hydrolager nach einem der Ansprüche 1 bis 3, **dadurch gekennzeichnet, dass** der Dämpfungskanal (8) oder die Drosselöffnung (11) im Kern des Traglagers (1) angeordnet sind.

5. Hydrolager nach einem der Ansprüche 1 bis 4, **dadurch gekennzeichnet, dass** der Dämpfungskanal (8) oder die Drosselöffnung (11) gewendelt im Kern (1) verlaufen.

6. Hydrolager nach einem der Ansprüche 1 bis 5, **dadurch gekennzeichnet, dass** der Ausgleichsraum (5) auf der der Umgebung (12) zugewandten Seite durch eine rollbalgartig ausgebildete, im Wesentlichen drucklos Volumen aufnehmende Membran (13) begrenzt ist.

## Claims

1. Hydraulic bearing, comprising a supporting bearing (1) and a mount (2), which are mutually connected by a spring element (3) of elastomeric material and delimit at least one working space (4) and at least one equalizing space (5), the working space and the equalizing space respectively being filled with damping fluid and being connected in a fluid-conducting manner by a damping device (6), a further damping device (6), upon relative radial displacement of the supporting bearing (1) and the mount (2) one to the other, being able to be flowed through by the damping fluid, the working space (4) having two volume-variable fluid pockets (9.1, 9.2) extending in the axial direction, which are connected by at least one restrictor orifice (11), **characterized in that** the two fluid pockets (9.1, 9.2) are hydraulically completely separated from the working space (4) and/or equalizing space (5) by a rigid component.

2. Hydraulic bearing according to Claim 1, **characterized in that** the damping device (6) is formed by a dividing wall (7) between the working space (4) and equalizing space (5) and **in that** the dividing wall (7) has at least one damping duct (8).

3. Hydraulic bearing according to one of Claims 1 or 2, **characterized in that** the working space (4) and the equalizing space (5) are axially juxtaposed and are arranged such that they are separated from one another by the dividing wall (7).

4. Hydraulic bearing according to one of Claims 1 to 3, **characterized in that** the damping duct (8) or the restrictor orifice (11) are disposed in the core of the supporting bearing (1).

5. Hydraulic bearing according to one of Claims 1 to 4, **characterized in that** the damping duct (8) or the restrictor orifice (11) run helically in the core (1).

6. Hydraulic bearing according to one of Claims 1 to 5, **characterized in that** the equalizing space (5) is delimited on the side facing the environment (12) by a membrane (13) of roller-bellows-like configuration, which absorbs volume in a substantially pressureless manner.

## Revendications

1. Support à amortissement hydraulique, comprenant un palier d'appui (1) et un support (2), qui sont assemblés l'un à l'autre par un corps élastique (3) en matériau caoutchouteux et qui délimitent au moins une chambre de travail (4) et au moins une chambre de compensation (5), dans lequel la chambre de travail et la chambre de compensation sont chacune remplies d'un liquide d'amortissement et sont raccordées en communication fluidique par un dispositif d'amortissement (6), dans lequel un autre dispositif d'amortissement (6) peut être parcouru par le liquide d'amortissement lors d'un déplacement radial relatif du palier d'appui (1) et du support (2) l'un par rapport à l'autre, dans lequel la chambre de travail (4) comporte deux poches de liquide (9.1, 9.2) à volume variable s'étendant en direction radiale, qui sont reliées par au moins une ouverture d'étranglement (11), **caractérisé en ce que** les deux poches de liquide (9.1, 9.2) sont complètement séparées hydrauliquement de la chambre de travail (4) et /ou de la chambre de compensation (5) par une pièce rigide.

2. Support à amortissement hydraulique selon la revendication 1, **caractérisé en ce que** le dispositif d'amortissement (6) est formé par une paroi de séparation (7) entre la chambre de travail (4) et la chambre de compensation (5) et **en ce que** la paroi de séparation (7) comprend au moins un canal d'amortissement (8).

3. Support à amortissement hydraulique selon la revendication 1 ou 2, **caractérisé en ce que** la chambre de travail (4) et la chambre de compensation (5) sont disposées à proximité l'une de l'autre en direction axiale et sont séparées l'une de l'autre par la paroi de séparation (7).

4. Support à amortissement hydraulique selon l'une quelconque des revendications 1 à 3, **caractérisé en ce que** le canal d'amortissement (8) ou l'ouverture d'étranglement (11) sont disposés dans le noyau du palier d'appui (1).

5. Support à amortissement hydraulique selon l'une quelconque des revendications 1 à 4, **caractérisé en ce que** le canal d'amortissement (8) ou l'ouverture d'étranglement (11) sont formés en hélice dans le noyau (1).

6. Support à amortissement hydraulique selon l'une quelconque des revendications 1 à 5, **caractérisé en ce que** la chambre de compensation (5) est limitée, sur le côté tourné vers l'atmosphère (12), par une membrane (13) réalisée en forme de soufflet enroulé, occupant un volume sensiblement sans pression.
